# EUROPÄISCHE PATENTSCHRIFT

(11) **EP 1 993 300 B1**
(45) Veröffentlichungstag und Bekanntmachung des Hinweises auf die Patenterteilung: **01.12.2010**
(21) Anmeldenummer: 07009874.4
(22) Anmeldetag: 18.05.2007
(51) Int. Cl.: H04W 60/00, H04W 60/06, H04W 84/00

(54) **Verfahren und Anordnung zum Herstellen einer netzübergreifenden Funkverbindung**
Method and device for establishing a cross-network wireless connection
Procédé et dispositif destinés à l'établissement d'une liaison radio entre différents réseaux

(43) Veröffentlichungstag der Anmeldung: 19.11.2008
(73) Patentinhaber: HÖRMANN FUNKWERK KÖLLEDA GMBH, 99625 Kölleda/Thür (DE)
(72) Erfinder: Schütz, Michael, 15537 Erkner (DE); Porsch, Lutz, 99610 Sömmerda (DE)
(74) Vertreter: Geyer, Fehners & Partner

(56) Entgegenhaltungen:
- EP-A- 1 328 093
- US-A1- 2002 085 511
- EIRENE PROJECT TEAM: "UIC Project EIRENE System Requirements Specification" INTERNET CITATION, [Online] 21. Oktober 2003 (2003-10-21), XP002322101 Gefunden im Internet: URL:http://gsm-r.uic.asso.fr/docs/specific ations/gsmr_frs_v6.pdf> [gefunden am 2005-03-22]
- LIESEGANG H ET AL: "DUAL-MODE RADIO COMMUNICATION UNITS FOR THE MIGRATION TO GSM-R RADIO COMMUNICATIONS AT DB AG" SIGNAL + DRAHT, TELZLAFF VERLAG GMBH. DARMSTADT, DE, Bd. 93, Nr. 9, September 2001 (2001-09), Seiten 52-56, XP001096904 ISSN: 0037-4997

## Beschreibung

### Gebiet der Erfindung

Die Erfindung bezieht sich auf ein Verfahren zum Herstellen einer netzübergreifenden Funkverbindung zwischen einem als Endgerät im digitalen Funknetz "Global System for Mobile Com-munications - Railway" (GSM-R) oder einem als Endgerät im analogen Funknetz nach dem Standart "UIC 751-3" in einem Zug, einem Zugverband oder einer Lokomotive betriebenen CAB-Radio, Kontrollern außerhalb des Zug, des Zugverbandes oder der Lokomotive und einem oder mehreren Endgeräten in "Professional Mobile Radio" - Funknetzen (PMR). Die Erfindung bezieht sich weiterhin auf eine Anordnung zur Ausübung dieses Verfahrens.

### Stand der Technik

Zu Kommunikationszwecken im Bahnverkehr werden derzeit sowohl analoge als auch digitale Funknetze genutzt. Aufgrund des stetig wachsenden Kommunikationsaufkommens im Zusammenhang mit der Forderung nach erhöhter Wirtschaftlichkeit, Leistungsfähigkeit und Sicherheit des Bahnverkehrs sowohl auf Neben- als auch Hochgeschwindigkeitsstrecken stoßen die analogen Funknetze, darunter die Funknetze nach dem Standard "UIC 751-3", an ihre Grenzen. Dies hat bereits dazu geführt, daß sich mehrere europäische Bahnverwaltungen für die Einführung des digitalen Kommunikationsnetzes GSM-R entschieden haben.

Das digitale GSM-R-Funknetz weist gegenüber den veralteten analogen Funknetzen im Hinblick auf die Übertragung von Daten zur Zugsteuerung und Zugsicherung, im Hinblick auf neue Funkanwendungen wie auch hinsichtlich einer zukünftigen Erweiterung um GPRS-Dienste bedeutende Vorteile auf.

Nachteilig dabei ist, daß die weitere Einführung des digitalen GMS-R-Funknetzes auf nationaler Ebene nach unterschiedlichen Zeitplänen abläuft. Außerdem kommt nachteilig hinzu, daß mehrere Bahnbetreiber auch lokale Funknetze, allgemein bezeichnet als "Professional Mobile Radio" (PMR), benutzen, darunter insbesondere Funknetze, die nach dem Standard des "Terrestrial Trunked Radio" (TETRA) arbeiten.

Um unter Berücksichtigung dieser Tatsache vor allem bei grenzüberschreitendem und sich dabei gegenseitig beeinflussendem Zugverkehr einen reibungslosen Ablauf garantieren zu können, sind entsprechende Geräte erforderlich, die sowohl in herkömmlichen analogen als auch in verschiedenen neuen digitalen Funknetzen betriebsbereit sind und bei Bedarf jederzeit netzübergreifend wirksam werden können.

In EIRENE PROJECT TEAM: "UIC Project EIRENE System Requirements Specification" INTERNET CITATION, [Online] 21. Oktober 2003 (2003-10-21), XP002322101 gefunden im Internet: URL:http://gsm-r.uic.asso.fr/docs/soecific ations/gsmr frs v6.pdf> [gefunden am 2005-03-22] - ist ein Netzwerk beschrieben, bei dem lediglich Geräte bzw. Endgeräte der gleichen Funktechnologie miteinander kommunizieren, und zwar innerhalb ein und desselben GSM-Funknetzes. Netzübergreifende Funkverbindungen zwischen Funknetzen grundlegend verschiedener Betriebsarten, wie beispielsweise GSM-R oder UIC einerseits und PMR andererseits, sind damit nicht herstellbar.

In LIESEGANG H ET AL: "DUAL-MODE RADIO COMMUNICATION UNITS FOR THE MIR-RATION TO GSM-R RADIO COMMUNICATOINS AT DB AG" SIGNAL + DRAHT, TELZLAFF VERLAG GMBH. DARMSTADT, DE, Bd. 93, Nr. 9 September 2001 (2001-09), Seiten 52-56, XP001096904 ISSN: 0037-4997 - ist die Möglichkeit zur Kommunikation zwischen einem ersten drahtlosen Kommunikationsgerät vom Typ 1 und einem zweiten drahtlosen Kommunikationsgerät vom Typ 2 über eine direkte Verbindung beschrieben. Netz- bzw. Infrastrukturen unterschiedlicher Funksysteme im vorgenannten Sinne oder die Herstellung netzübergreifender Funkverbindungen zwischen solchen unterschiedlichen Funksystemen sind nicht beschrieben.

Davon ausgehend liegt der Erfindung die Aufgabe zugrunde, ein Verfahren und eine Anordnung zu schaffen, mit denen Kommunikationsbeziehungen zwischen unterschiedlichen Funknetzen im Zusammenhang mit dem Bahnbetrieb hergestellt werden können.

### Beschreibung der Erfindung

Diese Aufgabe wird für ein Verfahren der eingangs beschriebenen Art mit folgenden Verfahrensschritten gelöst:
a) Integration eines zu den PMR-Endgeräten funktional äquivalenten Geräte-Moduls in das CAB-Radio,
b) Anmelden der Funkverbindung vom CAB-Radio bei einem oder mehreren PMR-Endgeräten oder umgekehrt bei Eintritt des CAB-Radios in den Bereich des PMR-Funknetzes durch Übermittlung von Adressierungs-Informationen,
c) Registrieren der sich anmeldenden PMR-Endgeräte beim CAB-Radio bzw. umgekehrt anhand der Adressierungs-Informationen, wobei mit dem Registrieren eine Einbindung der PMR-Endgeräte in das digitale oder analoge Funknetz erfolgt,
d) Kommunikation der Nutzer der in das digitale oder analoge Funknetz eingebundenen PMR-Endgeräte mit dem Nutzer des CAB-Radio und/oder mit den Kontrollern über die Funkverbindung, und
e) Beenden der Funkverbindung mit den PMR-Endgeräten durch Senden und Empfangen eines Funktionscodes "Deregistrieren" oder bei Austritt des CAB-Radios aus dem Bereich des PMR-Funknetzes.

Dieses Verfahren ermöglicht im Zusammenhang mit der dezentralen Verwaltung in einem CAB-Radio eine kostengünstige Realisierung von netzübergreifenden Kommunikationsverbindungen zwischen PMR-Funknetzen, wie TETRA-Netzen, einerseits und den Teilnehmern bzw. Komponenten eines digitalen GSM-R-Funknetzes oder eines analogen UIC 751-3-Funknetzes andererseits.

Die Vorteile bestehen vor allem in einer temporären Gültigkeit der Kommunikationsbeziehung, einer Zuordnung von PMR-Endgeräten zu dem Zug, dem Zugverband oder der Lokomotive, der Möglichkeit von ortsbezogenen Zuordnungen, der Möglichkeit der direkten Kommunikation zwischen lokalen PMR-Funknetzen und dem den Bereich dieser Funknetze durchfahrenden Zug, Zugverband oder Lokomotive, sowie den im GSM-R-Funknetz arbeitenden Kontrollern.

So können im digitalen GSM-R-Funknetz oder einem analogen UIC 751-3-Funknetz außerhalb von Zügen, von Zugverbänden oder von Lokomotiven stationär arbeitende Kontroller nicht nur mit dem Nutzer des CAB-Radio kommunizieren, das in dem Zug, dem Zugverband oder der Lokomotive betrieben wird, sondern darüber hinaus auch mit den Nutzern der registrierten PMR-Endgeräte in den PMR-Funknetzen, in dessen Bereich sich der Zug, der Zugverband oder die Lokomotive augenblicklich befindet. Die Endgeräte in diesen PMR-Funknetzen sind dabei aufgrund der Registrierung in dem digitalen GSM-R-Funknetz oder analogen UIC 751-3-Funknetz gleichberechtigte Teilnehmer in diesen digitalen oder analogen Netzen.

Die Bezeichnung CAB-Radio steht im Zusammenhang mit der vorliegenden Erfindung für den Begriff "Kabinen-Radio", womit die Zuordnung und Mitführung eines solchen Gerätes in einem Zug, Zugverband oder einer Lokomotive dokumentiert ist.

Das CAB-Radio übernimmt dabei erfindungsgemäß die Funktion eines Gateway, über das die Kommunikationsteilnehmer aufeinander zugreifen können. Unter dem Begriff Kontroller sollen im Zusammenhang mit der hier vorliegenden Erfindung beispielsweise die Betriebszentrale einer Bahn als erster Kontroller, ein Fahrdienstleiter als zweiter Kontroller und ein Energieverantwortlicher als dritter Kontroller verstanden werden.

In einer bevorzugten Ausgestaltung des erfindungsgemäßen Verfahrens wird in das Bussystem eines Monomode-CAB-Radios oder eines Bi-Mode-CAB-Radios ein PMR-Transceiver-Modul integriert. Alternativ ist es auch denkbar, ein PMR-Transceiver-Modul als externes Gerät über Schnittstellen mit einem Monomode-CAB-Radio oder einem Bi-Mode-CAB-Radio zu verbinden.

Zur Anmeldung der Funkverbindung kann beispielsweise vom CAB-Radio aus an ein ausgewähltes PMR-Endgerät, an eine Gruppe ausgewählter PMR-Endgeräte oder an alle PMR-Endgeräte eines lokalen, im Sende- und Empfangsbereich des CAB-Radios sich befindenden PMR-Funknetzes eine Short Data Service - Nachricht (SDS-Nachricht) mit Informationen gesendet werden, die im Wesentlichen die endgerätebezogene individuelle Adresse, die Zieladresse, insbesondere die dem CAB-Radio zugeordnete Zugnummer, und einen Funktionscode "Beitrittswunsch zur funktionalen Adressierung" umfassen.

Umgekehrt kann auch von einem oder mehreren PMR-Endgeräten mittels einer SDS-Nachricht, die die entsprechenden Informationen enthält, der Beitrittswunsch an das CAB-Radio gerichtet werden.

Nach dem Senden und Empfangen der SDS-Nachricht erfolgt anhand der mit dem Funktionscode "Beitrittswunsch zur funktionalen Adressierung" übermittelten Informationen über das CAB-Radio die Registrierung der sich anmeldenden PMR-Endgeräte im digitalen bzw. analogen Funknetz durch Vergabe einer Funktionalen Nummer. Die Registrierung kann automatisch oder auch manuell ausgelöst werden. Die erforderlichen Handlungen zur manuellen Registrierung werden vom Nutzer des CAB-Radios, beispielsweise dem Lokführer des Zuges oder Zugverbandes, durch Vergabe der Funktionalen Nummer ausgeführt.

Nun sind die sich anmeldenden PMR-Endgeräten innerhalb des digitalen oder analogen Funknetzes gleichberechtigte Adressen bzw. Kommunikationsteilnehmer, und es werden beispielsweise nach Bedarf Punkt-zu-Punkt-Funkverbindungen (P2P-Funkverbindungen) zwischen den im digitalen Funknetz "Global System for Mobile Communications - Railway" (GSM-R) oder im analogen Funknetz "UIC 751-3" arbeitenden Kontrollern und einem PMR-Endgerät, den Kontrollern und einer Gruppe von PMR-Endgeräten oder den Kontrollern und allen PMR-Endgeräten eines PMR-Funknetzes aufgebaut. Das CAB-Radio dient hierbei als Gateway.

Die so aufgebauten Funkverbindungen können sowohl zur Übermittlung von Sprachinformationen als auch zur Datenübertragung genutzt werden.

Im Rahmen der Erfindung liegt es, Funkverbindungen zwischen dem CAB-Radio und einem oder mehreren Endgerät eines nach dem Standard des "Terrestrial Trunked Radio" (TETRA) arbeitenden lokalen PMR-Funknetzes herzustellen. Dabei können sowohl die Betriebsart "Trunking Mode Operation" (TMO) oder die Betriebsart "Direct Mode Operation" (DMO) genutzt werden.

Die Erfindung bezieht sich weiterhin auf eine Anordnung zum Herstellen einer netzübergreifenden Funkverbindung zwischen einem Endgerät des digitalen Funknetzes "Global Systeme for Mobile Communications - Railway" (GSM-R), insbesondere zwischen einem Zug, einem Zugverband, oder einer Lokomotive zugeordneten mobilen CAB-Radio einerseits und einem oder mehreren Endgeräten eines als "Professional Mobile Radio" (PMR) außerhalb des Zuges, Zugverbandes oder der Lokomotive betriebenen lokalen Funknetzes andererseits.

Erfindungsgemäß umfaßt eine solche Anordnung
- ein in das Bussystem des CAB-Radios integriertes oder als externes Gerät mit dem CAB-Radio verbundenes PMR-Transceiver-Modul,
- eine in das CAB-Radio integrierte oder mit dem CAB-Radio verbundene Steuerschaltung zur Ansteuerung des PMR-Transceiver-Moduls, und
- in das CAB-Radio integrierte oder mit dem CAB-Radio verbundene Adreß-, Funktions- und Betriebsstatus-Datenbanken.

Die Steuerschaltung ist insbesondere zur nutzergetriggerten und temporären Zuordnung von PMR-Endgeräten zu dem Zug oder dem Zugverband ausgebildet, dem das CAB-Radio zugeordnet ist, oder zu der Lokomotive, die das CAB-Radio mit sich führt.

Des weiteren ist die Steuerschaltung zur nutzergetriggerten oder administrativen Aufhebung dieser Zuordnung ausgebildet.

In den Fällen, bei denen innerhalb des Zuges oder des Zugverbandes drahtgebunden oder drahtlos mit dem CAB-Radio gekoppelte Geräte zur akustisch oder visuell wahrnehmbaren Ausgabe von Informationen vorhanden sind kann mittels der netzübergreifenden Funkverbindung eine Informationsübermittlung von einem oder mehreren PMR-Endgeräten über das CAB-Radio zu diesen Geräten vorgesehen sein.

Auf diese Weise ist zum Beispiel die Übermittlung von Informationen an die Fahrgäste eines in einen Bahnhof einfahrenden Zuges von einem PMR-Endgerät aus über das CAB-Radio und die innerhalb des Zuges mit dem CAB-Radio gekoppelten Lautsprecher oder Anzeigedisplays möglich. Andererseits können von den Kontrollern kommende Anweisungen oder organisatorische Hinweise über das CAB-Radio direkt an die Nutzer der einbezogenen PMR-Endgeräte gerichtet werden.

Besonders bevorzugt sind die PMR-Endgeräte als Endgeräte eines nach dem Standard des "Terrestrial Trunked Radio" (TETRA) arbeitenden lokalen Funknetzes ausgebildet.

### Kurze Beschreibung der Zeichnungen

Die Erfindung soll nachfolgend anhand eines Ausführungsbeispieles näher erläutert werden. In den zugehörigen Zeichnungen zeigen
- Fig.1: eine Prinzipdarstellung zum erfindungsgemäßen Verfahren,
- Fig.2: die wesentlichen Verfahrensschritte zum Herstellen und Nutzen einer Funkverbindung zwischen einem PMR-Endgerät, in diesem Fall einem TETRA-Funkgerät, und einem CAB-Radio,
- Fig.3: die wesentlichen Verfahrensschritte zum Beenden der nach den Verfahrensschritten gemäß Fig.2 hergestellten Funkverbindung,
- Fig.4: das Prinzip der funktionalen Adressierung.

### Ausführliche Beschreibung der Zeichnungen

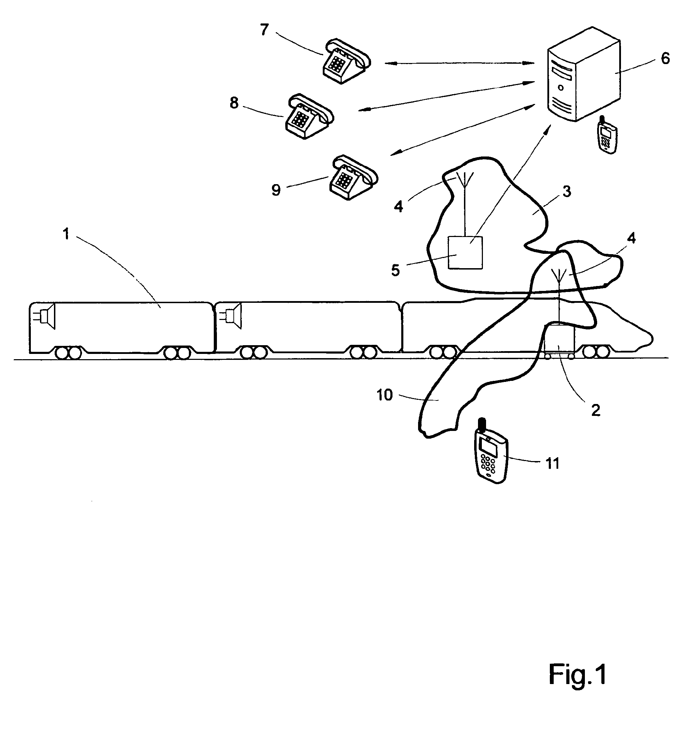

In Fig.1 ist der Erfindungsgedanke anhand eines Zugverbandes 1 dargestellt, der in üblicher Weise mit einem CAB-Radio 2 ausgestattet ist. Das CAB-Radio 2 sei in dem hier gewählten Ausführungsbeispiel Endgerät in einem digitalen GSM-R-Funknetz 3 und als solches dem Lokführer des Zugverbandes zur Benutzung zugeordnet. Zur Aufrechterhaltung der Funkverbindung zwischen dem CAB-Radio 2 im Zug und den Komponenten des GSM-R-Funknetzes 3, die sich an zentraler Stelle stationär außerhalb des Zuges befinden, sind Sende- und Empfangsantennen 4 vorgesehen. Prinzipiell kann das CAB-Radio 2 auch ein Endgerät in einem analogen Funknetz nach dem Standard "UIC 751-3" sein.

Während der Fahrt des Zugverbandes 1 ist das CAB-Radio 2 über eine Basisstation 5 mit weiteren Komponenten des GSM-R-Funknetzes 3 verbunden. Dabei übernimmt die Basisstation 5, wie in Fig.1 angedeutet, die Funktion eines Mobile Service Centers 6, das beispielhaft mit der Betriebszentrale als erstem Kontroller 7, einem Fahrdienstleiter als zweitem Kontroller 8 und einem Energieverantwortlichen als drittem Kontroller 9 in Verbindung steht.

Damit ist über die Basisstation 5 die Kommunikation zwischen den Kontrollern 7, 8, 9 außerhalb des Zugverbandes 1 und dem Lokführer als Nutzer des CAB-Radios 2 innerhalb des Zugverbandes 1 möglich.

Es sei angenommen, der Zugverband 1 befinde sich während seiner Fahrt oder auch an Haltestellen temporär in Reichweite eines lokalen PMR-Funknetzes 10, das beispielsweise als "Terrestrial Trunked Radio" (TETRA) arbeitet und mit TETRA-Endgeräten betrieben wird. Der Übersichtlichkeit halber ist in Fig.1 lediglich nur eines dieser TETRA-Endgeräte, beispielsweise ein Handgerät 11, dargestellt.

Um das PMR-Funknetz 10 in die bereits innerhalb des GSM-R-Funknetzes 3 bestehende Kommunikation einbeziehen zu können, ist erfindungsgemäß vorhanden:
- ein in das Bussystem des CAB-Radios 2 integriertes oder als externes Gerät mit dem CAB-Radio 2 verbundenes PMR-Transceiver-Modul,
- eine in das CAB-Radio 2 integrierte oder mit dem CAB-Radio 2 verbundene Steuerschaltung zur Ansteuerung des PMR-Transceiver-Moduls, und
- in das CAB-Radio 2 integrierte oder mit dem CAB-Radio 2 verbundene Adress-, Funktions- und Betriebsstatus-Datenbanken.

Dabei ist das PMR-Transceiver-Modul (zeichnerisch nicht dargstellt) mit einer eigenen Antenne ausgestattet oder steht über eine HF-Einkopplung mit der Antenne des CAB-Radios 2 in Verbindung. Weiterhin ist jeweils eine Schaltung zur Weiterleitung von Sprache und zur Weiterleitung von Daten vom CAB-Radio 2 zu dem PMR-Transceiver-Modul bzw. umgekehrt vorhanden.

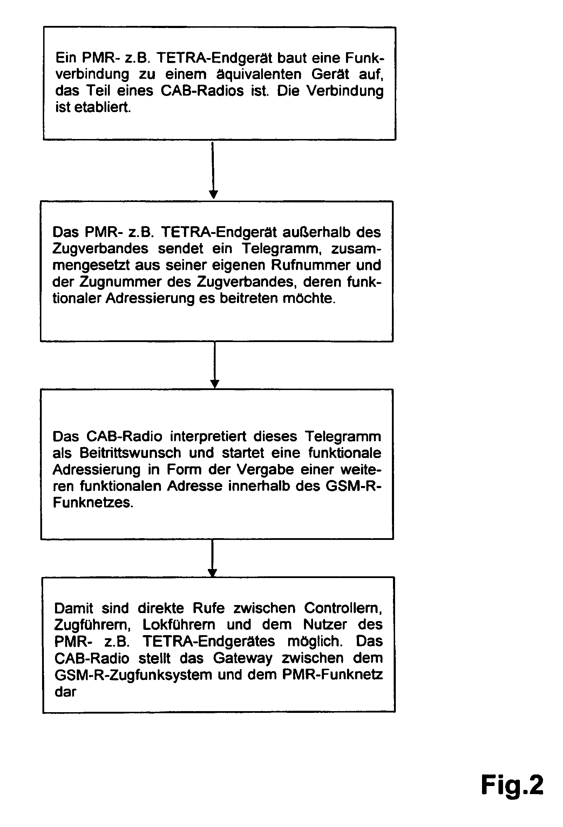

Dazu zeigt Fig.2 die wesentlichen Verfahrensschritte zum Herstellen und Nutzen einer Funkverbindung zwischen einem PMR-Endgerät, in diesem Fall dem als Handgerät 11 ausgebildeten TETRA-Endgerät, und dem CAB-Radio 2.

So wird zum Beispiel von dem sich außerhalb des Zugverbandes 1 befindenden Handgerät 11 aus ein Telegramm in Form einer Short Data Service - Nachricht gesendet, welche die endgerätebezogene individuelle Adresse, die Zieladresse, insbesondere die dem CAB-Radio 2 zugeordnete Zugnummer, und einen Funktionscode "Beitrittswunsch zur funktionalen Adressierung" umfaßt. Diese Short Data Service - Nachricht kann optional paßwortgeschützt übermittelt werden.

Nach dem Senden und Empfangen der SDS-Nachricht wird anhand der mit dem Funktionscode "Beitrittswunsch zur funktionalen Adressierung" übermittelten Informationen die Registrierung des sich anmeldenden Handgerätes 11 im GSM-R-Funknetz 3 durch Vergabe einer Funktionalen Nummer vorgenommen. Die Registrierung wird beispielsweise manuell ausgelöst, indem die Funktionale Nummer vom Nutzer des CAB-Radios 2, in diesem Fall dem Lokführer, vergeben wird.

Von nun an sind direkte Rufe zwischen den Kontrollern 7, 8, 9 dem Lokführer und dem Nutzer des Handgerätes 11 möglich. Das CAB-Radio 2 hat damit die Funktion eines Gateway zwischen den Geräten des GSM-R-Funknetzes 3 und dem Handgerät 11.

In der beschriebenen Weise können selbstverständlich nicht nur Funkverbindungen zwischen den Geräten des GSM-R-Funknetzes 3 und dem Handgerät 11, sondern auch zu einer Gruppe oder allen PMR-Endgeräten des PMR-Funknetzes 10 aufgebaut werden. An der Kommunikation kann auch der Zugführer oder ein Zugbegleiter des Zugverbandes 1 teilnehmen, sofern er Zugang zur Benutzung des CAB-Radios 2 hat.

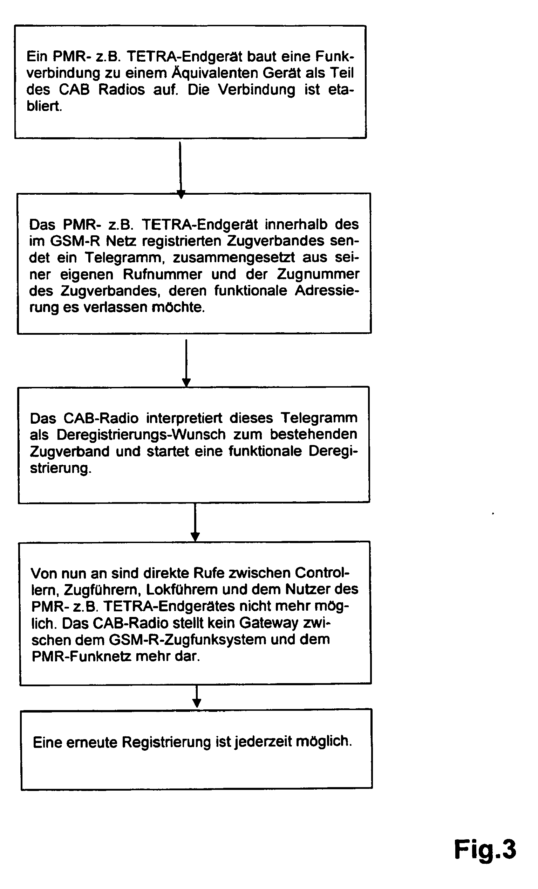

Fig.3 zeigt die wesentlichen Verfahrensschritte zum Beenden der nach den Verfahrensschritten gemäß Fig.2 hergestellten Funkverbindung.

Soll die Verbindung abgebrochen werden, wird beispielsweise von dem Handgerät 11 aus ein Deregistrierungs-Wunsch, wiederum als ein spezielles Telegramm, an das CAB-Radio 2 gesendet. Auch hier werden die eigene Rufnummer des Handgerätes 11 und die Zugnummer des Zugverbandes 1 übermittelt. Der Deregistrierungs-Wunsch kann wiederum paßwortgeschützt übermittelt werden.

Das CAB-Radio 2 interpretiert dieses Telegramm als Deregistrierungs-Wunsch und startet eine funktionale Deregistrierung. Dies kann wiederum manuell vom Nutzer des CAB-Radios 2, hier also dem Lokführer, vorgenommen werden.

Von nun an sind direkte Rufe zwischen den Kontrollern 7, 8, 9, dem Lokführer am CAB-Radio 2 und dem Nutzer des Handgerätes 11 nicht mehr möglich. Die Funktion des CAB-Radios 2 als Gateway zwischen dem GSM-R-Funknetz 3 und dem PMR-Funknetz 10 ist beendet. Eine erneute Registrierung ist jederzeit möglich.

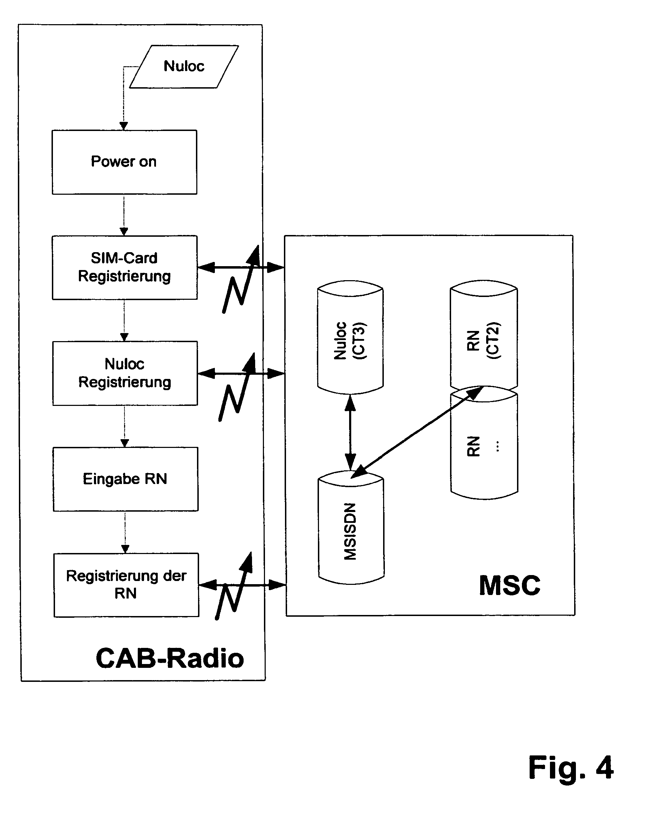

Fig.4 zeigt in selbst erklärender Weise das Prinzip der funktionalen Adressierung in der Kommunikation zwischen dem CAB-Radio 2 und dem Mobile Service Centers 6 (MSC) als Komponenten des GSM-R-Funknetzes 3.

## Patentansprüche

1. Verfahren zum Herstellen einer netzübergreifenden Funkverbindung zwischen
- einem als Endgerät im digitalen Funknetz "Global System for Mobile Communications - Railway" GSM-R oder einem als Endgerät im analogen Funknetz nach dem Standard "U-IC 751-3" in einem Zug, einem Zugverband (1) oder einer Lokomotive betriebenen CAB-Radios (2),
- den im digitalen Funknetz "Global System for Mobile Communications - Railway" GSM-R oder im analogen Funknetz "UIC 751-3" außerhalb des Zug, des Zugverbandes (1) oder der Lokomotive arbeitenden Kontrollern (7, 8, 9), und
- einem oder mehreren Endgeräten in "Professional Mobile Radio" - Funknetzen PMR,
**gekennzeichnet durch folgende Verfahrensschritte:**
f) Integration eines zu den PMR-Endgeräten funktional äquivalenten Geräte-Moduls in das CAB-Radio (2),
g) Anmelden der Funkverbindung vom CAB-Radio (2) bei einem oder mehreren PMR-Endgeräten oder umgekehrt bei Eintritt des CAB-Radios (2) in den Bereich des PMR-Funknetzes (10) **durch** Übermittlung von Adressierungs-Informationen,
h) Registrieren der sich anmeldenden PMR-Endgeräte beim CAB-Radio (2) bzw. umgekehrt anhand der Adressierungs-Informationen, wobei mit dem Registrieren eine Einbindung der PMR-Endgeräte in das digitale oder analoge Funknetz erfolgt,
i) Kommunikation der Nutzer der in das digitale oder analoge Funknetz eingebundenen PMR-Endgeräte mit einem Nutzer des CAB-Radio (2) und/oder mit den Kontrollern (7, 8, 9) über die Funkverbindung, und
j) Beenden der Funkverbindung mit den PMR-Endgeräten **durch** Senden und Empfangen eines Funktionscodes "Deregistrieren" oder bei Austritt des CAB-Radios (2) aus dem Bereich des PMR-Funknetzes (10).

2. Verfahren nach Anspruch 1, bei dem in ein Bussystem eines Monomode-CAB-Radios oder eines Bi-Mode-CAB-Radios ein PMR-Transceiver-Modul integriert oder ein PMR-Transceiver-Modul als externes Gerät über Schnittstellen mit einem Monomode-CAB-Radio (2) oder einem Bi-Mode-CAB-Radio verbunden wird.

3. Verfahren nach Anspruch 1 oder 2, bei dem zur Anmeldung der Funkverbindung vom CAB-Radio (2) an das oder die PMR-Endgeräte bzw. umgekehrt eine SDS-Nachricht mit Informationen gesendet wird, die die endgerätebezogene individuelle Adresse, die Zieladresse, insbesondere die dem CAB-Radio (2) zugeordnete Zugnummer, und einen Funktionscode "Beitrittswunsch zur funktionalen Adressierung" umfassen.

4. Verfahren nach Anspruch 3, bei dem nach dem Senden und Empfangen der SDS-Nachricht eine funktionale Adressierung innerhalb des digitalen oder analogen Funknetzes vorgenommen wird, in dem das CAB-Radio (2) Endgerät ist, und dabei dem jeweiligen PMR-Endgerät eine innerhalb dieses Funknetzes gleichberechtigte Adresse zugeordnet wird.

5. Verfahren nach Anspruch 4, bei dem anhand der vergebenen Adressen P2P-Funkverbindungen zwischen den im digitalen oder analogen Funknetz arbeitenden CAB-Radio (2) und/oder den Kontrollern (7, 8, 9) und einem, einer Gruppe oder allen PMR-Endgeräten eines PMR-Funknetzes (10) aufgebaut wird.

6. Verfahren nach einem der vorgenannten Ansprüche, bei dem die Funkverbindung zwischen dem CAB-Radio (2) und einem oder mehreren Endgerät eines nach dem Standard des "Terrestrial Trunked Radio" TETRA arbeitenden lokalen PMR-Funknetzes (10) hergestellt wird.

7. Verfahren nach Anspruch 6, bei dem bei der Herstellung der Funkverbindung zwischen dem CAB-Radio (2) und einem oder mehreren TETRA-Endgeräten die Betriebsart "Trunking Mode Operation" TMO oder die Betriebsart "Direct Mode Operation" DMO genutzt wird.

8. Verfahren nach einem der vorgenannten Ansprüche, bei dem die Funkverbindung zur Datenübertragung genutzt wird.

9. Anordnung zum Herstellen einer netzübergreifenden Funkverbindung zwischen einem Endgerät des digitalen Funknetzes "Global Systeme for Mobile Communications - Railway" GSM-R, nämlich zwischen einem mobilen CAB-Radio (2), das einem Zug, einem Zugverband, oder einer Lokomotive zugeordnet ist, den im digitalen Funknetz "Global System for Mobile Communications - Railway" GSM-R arbeitenden Kontrollern (7, 8, 9) einerseits und einem oder mehreren Endgeräten eines als "Professional Mobile Radio" PMR betriebenen lokalen Funknetzes (10) andererseits,
**gekennzeichnet durch**
- ein in ein Bussystem des CAB-Radios (2) integriertes oder als externes Gerät mit dem CAB-Radio (2) verbundenes PMR-Transceiver-Modul,
- eine in das CAB-Radio (2) integrierte oder mit dem CAB-Radio (2) verbundene Steuerschaltung zur Ansteuerung des PMR-Transceiver-Moduls, und
- in das CAB-Radio (2) integrierte oder mit dem CAB-Radio (2) verbundene Adress-, Funktions- und Betriebsstatus-Datenbanken, ausgebildet
- zum Anmelden der Funkverbindung vom CAB-Radio (2) bei einem oder mehreren PMR-Endgeräten oder umgekehrt bei Eintritt des CAB-Radios (2) in den Bereich des PMR-Funknetzes (10) **durch** Übermittlung von Adressierungs-Informationen,
- zum Registrieren der sich anmeldenden PMR-Endgeräte beim CAB-Radio (2) bzw. umgekehrt anhand der Adressierungs-Informationen, wobei mit dem Registrieren eine Einbindung der PMR-Endgeräte in das digitale oder analoge Funknetz erfolgt,
- zur Kommunikation der Nutzer der in das digitale oder analoge Funknetz eingebundenen PMR-Endgeräte mit einem Nutzer des CAB-Radio (2) und/oder mit den Kontrollern (7, 8, 9) über die Funkverbindung, und
- zum Beenden der Funkverbindung mit den PMR-Endgeräten **durch** Senden und Empfangen eines Funktionscodes "Deregistrieren" oder bei Austritt des CAB-Radios (2) aus dem Bereich des PMR-Funknetzes (10).

10. Anordnung nach Anspruch 9, bei der die Steuerschaltung zur nutzergetriggerten und temporären Zuordnung von PMR-Endgeräten zu dem Zug, dem Zugverband, oder der Lokomotive ausgebildet ist, in dem das CAB-Radio (2) betrieben wird, so dass die PMR-Endgeräte als gleichberechtigte Teilnehmer in das digitale oder analoge Funknetz eingebunden sind.

11. Anordnung nach Anspruch 10, bei der die Steuerschaltung zur nutzergetriggerten oder administrativen Aufhebung der Zuordnung von PMR-Endgeräten zu dem Zug, dem Zugverband, oder der Lokomotive ausgebildet ist, in dem das CAB-Radio (2) betrieben wird, so dass die PMR-Endgeräte nicht mehr als Teilnehmer in das digitale oder analoge Funknetz eingebunden sind.

12. Anordnung nach einem der Ansprüche 9 bis 11, bei der innerhalb des Zuges oder des Zugverbandes drahtgebunden oder drahtlos mit dem CAB-Radio (2) gekoppelte Geräte zur akustisch oder visuell wahrnehmbaren Ausgabe von Informationen vorhanden sind und mittels der netzübergreifenden Funkverbindung eine Informationsübermittlung von einem oder mehreren PMR-Endgeräten über das CAB-Radio (2) zu diesen Geräten vorgesehen ist.

13. Anordnung nach einem der Ansprüche 9 bis 12, bei der die PMR-Endgeräte Endgeräte eines als "Terrestrial Trunked Radio" TETRA arbeitenden lokalen PMR-Funknetzes (10) sind.

## Claims

1. Method for producing a cross-network radio connection between
- a CAB radio (2) which is operated in a train, trainset (1) or locomotive as a terminal in the "Global System for Mobile Communications - Railway" (GSM-R) digital radio network, or as a terminal in the analogue radio network according to the "UIC 731-3" standard,
- the controllers (7, 8, 9) which work outside the train, trainset (1) or locomotive in the "Global System for Mobile Communications - Railway" (GSM-R) digital radio network or in the "UIC 751-3" analogue radio network,
- one or more terminals in the "Professional Mobile Radio" (PMR) radio networks,
**characterized by** the following method steps:
f) integrating a device module which is functionally equivalent to the PMR terminals into the CAB radio (2),
g) logging in the radio connection of the CAB radio (2) to one or more PMR terminals, or vice versa, when the CAB radio (2) enters the area of the PMR radio network (10), by transmission of addressing information,
h) registering the logging-in PMR terminals with the CAB radio (2), or vice versa, on the basis of the addressing information, the PMR terminals being linked into the digital or analogue radio network on registration,
i) communication by the users of the PMR terminals which are linked into the digital or analogue radio network with a user of the CAB radio (2) and/or the controllers (7, 8, 9) via the radio connection, and
j) ending the radio connection to the PMR terminals by sending and receiving a "Deregister" function code, or when the CAB radio (2) leaves the area of the PMR radio network (10).

2. Method according to Claim 1, wherein a PMR transceiver module is integrated into a bus system of a monomode CAB radio or bimode CAB radio, or a PMR transceiver module is connected via interfaces to a monomode CAB radio (2) or bimode CAB radio as an external device.

3. Method according to Claim 1 or 2, wherein to log in the radio connection from the CAB radio (2) to the PMR terminal(s) or vice versa, an SDS message is sent, with information including the individual address referring to the terminal, the destination address, in particular the train number assigned to the CAB radio (2), and a function code "access wish for functional addressing".

4. Method according to Claim 3, wherein after the SDS message is sent and received, functional addressing is carried out within the digital or analogue radio network in which the CAB radio (2) is, and thereby an address with equal rights within this radio network is assigned to the relevant PMR terminal.

5. Method according to Claim 4, wherein on the basis of the assigned addresses, P2P radio connections are set up between the CAB radios (2) which work in the digital or analogue radio network and/or the controllers (7, 8, 9) and one, a group of or all PMR terminals of a PMR radio network (10).

6. Method according to any one of the preceding claims, wherein the radio connection is made between the CAB radio (2) and one or more terminals of a local PMR radio network (10) which works according to the standard of "Terrestrial Trunked Radio" (TETRA).

7. Method according to Claim 6, wherein when the radio connection is made between the CAB radio (2) and one or more TETRA terminals, the "Trunking Mode Operation" (TMO) or "Direct Mode Operation" (DMO) operating mode is used.

8. Method according to any one of the preceding claims, wherein the radio connection is used for data transmission.

9. Arrangement for producing a cross-network radio connection between a terminal of the "Global System for Mobile Communications - Railway" (GSM-R) digital radio network, that is between a mobile CAB radio (2) which is associated with a train, trainset (1) or locomotive, the controllers (7, 8, 9) which work in the "Global System for Mobile Communications - Railway" (GSM-R) digital radio network on the one hand, and one or more terminals of a local radio network (10) which is operated as "Professional Mobile Radio" (PMR) on the other hand,
**characterized by**
- a PMR transceiver module which is integrated into a bus system of the CAB radio (2) or connected as an external device to the CAB radio (2),
- a control circuit which is integrated into the CAB radio (2) or connected to the CAB radio (2), to drive the PMR transceiver module,
- address, function and operating status databases which are integrated into the CAB radio (2) or connected to the CAB radio (2), in a form for
- logging in the radio connection of the CAB radio (2) to one or more PMR terminals, or vice versa, when the CAB radio (2) enters the area of the PMR radio network (10), by transmission of addressing information,
- registering the logging-in PMR terminals with the CAB radio (2), or vice versa, on the basis of the addressing information, the PMR terminals being linked into the digital or analogue radio network on registration,
- communication by the users of the PMR terminals which are linked into the digital or analogue radio network with a user of the CAB radio (2) and/or the controllers (7, 8, 9) via the radio connection, and
- ending the radio connection to the PMR terminals by sending and receiving a "Deregister" function code, or when the CAB radio (2) leaves the area of the PMR radio network (10).

10. Arrangement according to Claim 9, wherein the control circuit is in a form for user-triggered, temporary assignment of PMR terminals to the train, trainset or locomotive in which the CAB radio (2) is operated, so that the PMR terminals are linked into the digital or analogue radio network as participants with equal rights.

11. Arrangement according to Claim 10, wherein the control circuit is in a form for user-triggered or administrative cancellation of the assignment of PMR terminals to the train, trainset or locomotive in which the CAB radio (2) is operated, so that the PMR terminals are no longer linked into the digital or analogue radio network as participants.

12. Arrangement according to any one of Claims 9 to 11, wherein within the train or trainset, devices which are connected by wire or wirelessly to the CAB radio (2) for audible or visible output of information are present, and by means of the cross-network radio connection, information transmission from one or more PMR terminals via the CAB radio (2) to these devices is provided.

13. Arrangement according to any one of Claims 9 to 12, wherein the PMR terminals are terminals of a local PMR radio network (10) which works as "Terrestrial Trunked Radio" (TETRA).

## Revendications

1. Procédé pour établir une liaison radioélectrique inter-réseaux entre
- une radio CAB (2) exploitée en tant que terminal dans le réseau radioélectrique numérique "Global System for Mobile Communications - Railway" GSM-R ou en tant que terminal dans un réseau radioélectrique analogique selon la norme "U-IC 751-3" à bord d'un train, d'un convoi (1) ou d'une locomotive,
- les contrôleurs (7, 8, 9) fonctionnant dans le réseau radioélectrique numérique "Global System for Mobile Communications - Railway" GSM-R ou dans le réseau radioélectrique analogique "UIC 751-3" en dehors du train, du convoi (1) ou de la locomotive, et
- un ou plusieurs terminaux dans des réseaux radioélectriques "Professional Mobile Radio" - PMR,
**caractérisé par** les étapes de procédé suivantes consistant à :
f) intégrer dans la radio CAB (2) un module d'appareil équivalent aux terminaux PMR sur le plan fonctionnel,
g) demander la liaison radioélectrique à partir de la radio CAB (2) à un ou plusieurs terminaux PMR ou vice versa, lorsque la radio CAB (2) entre dans la zone du réseau radioélectrique PMR (10) en relayant des informations d'adressage,
h) enregistrer les terminaux PMR demandeurs dans la radio CAB (2) ou vice versa, à l'aide des informations d'adressage, dans lequel l'enregistrement implique une incorporation des terminaux PMR dans le réseau radioélectrique numérique ou analogique,
i) établir une communication entre les utilisateurs des terminaux PMR incorporés dans le réseau radioélectrique numérique ou analogique et un utilisateur de la radio CAB (2) et/ou les contrôleurs (7, 8, 9) par l'intermédiaire de la liaison radioélectrique, et
j) terminer la liaison radioélectrique avec les terminaux PMR par l'envoi et la réception d'un code de fonction de "désenregistrement" ou lorsque la radio CAB (2) quitte la zone du réseau radioélectrique PMR (10).

2. Procédé selon la revendication 1, dans lequel un module émetteur/récepteur PMR est intégré dans un système de bus d'une radio CAB monomode ou d'une radio CAB bi-mode, ou bien un module émetteur/récepteur PMR est relié en tant qu'appareil externe par l'intermédiaire d'interfaces à une radio CAB (2) monomode ou une radio CAB bi-mode.

3. Procédé selon la revendication 1 ou 2, dans lequel pour demander la liaison radioélectrique de la radio CAB (2) au terminal ou aux terminaux PMR ou vice versa, un message SDS avec des informations est envoyé, comprenant l'adresse individuelle liée au terminal, l'adresse de destination, en particulier le numéro de train attribué à la radio CAB (2), et un code de fonction "demande d'adhésion à l'adressage fonctionnel".

4. Procédé selon la revendication 3, dans lequel, après l'envoi et la réception du message SDS, un adressage fonctionnel est effectué à l'intérieur du réseau radioélectrique numérique ou analogique, dans lequel la radio CAB (2) est le terminal, et dans lequel une adresse équivalente à l'intérieur de ce réseau radioélectrique est attribuée au terminal PMR respectif.

5. Procédé selon la revendication 4, dans lequel, à l'aide des adresses allouées, des liaisons radioélectriques P2P sont établies entre la radio CAB (2) fonctionnant dans le réseau radioélectrique numérique ou analogique et/ou les contrôleurs (7, 8, 9) et un terminal, un groupe de terminaux ou tous les terminaux PMR d'un réseau radioélectrique PMR (10).

6. Procédé selon l'une quelconque des revendications précédentes, dans lequel la liaison radioélectrique est établie entre la radio CAB (2) et un ou plusieurs terminaux d'un réseau radioélectrique PMR (10) local fonctionnant selon la norme "Terrestrial Trunked Radio" TETRA.

7. Procédé selon la revendication 6, dans lequel lors de l'établissement de la liaison radioélectrique entre la radio CAB (2) et un ou plusieurs terminaux TETRA, le mode de fonctionnement "Trunking Mode Operation" TMO ou le mode de fonctionnement "Direct Mode Operation" DMO est utilisé.

8. Procédé selon l'une quelconque des revendications précédentes, dans lequel la liaison radioélectrique est utilisée pour la transmission de données.

9. Ensemble pour établir une liaison radioélectrique inter-réseaux entre un terminal du réseau radioélectrique numérique "Global System for Mobile Communications - Railway" GSM-R, notamment entre une radio CAB (2) mobile, attribuée à un train, un convoi ou une locomotive, les contrôleurs (7, 8, 9) fonctionnant dans le réseau radioélectrique numérique "Global System for Mobile Communications - Railway" GSM-R, d'une part, et un ou plusieurs terminaux d'un réseau radioélectrique local (10) exploité en tant que "Professional Mobile Radio" PMR,
**caractérisé par**
- un module émetteur/récepteur PMR intégré dans le système de bus de la radio CAB (2) ou relié à la radio CAB (2) en tant qu'appareil externe,
- un circuit de commande intégré à la radio CAB (2) ou relié à la radio CAB (2) pour piloter le module émetteur/récepteur PMR, et
- des bases de données d'adresses, de fonctions et d'états de fonctionnement, intégrées dans la radio CAB (2) ou reliées à la radio CAB (2),
réalisé pour
- demander la liaison radioélectrique à partir de la radio CAB (2) à un ou plusieurs terminaux PMR ou vice versa, lorsque la radio CAB (2) entre dans la zone du réseau radioélectrique PMR (10) en relayant des informations d'adressage,
- enregistrer les terminaux PMR demandeurs dans la radio CAB (2) ou vice versa, à l'aide des informations d'adressage, dans lequel l'enregistrement implique une incorporation des terminaux PMR dans le réseau radioélectrique numérique ou analogique,
- établir une communication entre les utilisateurs des terminaux PMR intégrés dans le réseau radioélectrique numérique ou analogique et un utilisateur de la radio CAB (2) et/ou les contrôleurs (7, 8, 9) par l'intermédiaire de la liaison radioélectrique, et
- terminer la liaison radioélectrique avec les terminaux PMR par l'envoi et la réception d'un code de fonction de "désenregistrement" ou lorsque la radio CAB (2) quitte la zone du réseau radioélectrique PMR (10).

10. Ensemble selon la revendication 9, dans lequel le circuit de commande est réalisé pour une attribution, déclenchée par l'utilisateur et temporaire, de terminaux PMR au train, au convoi ou à la locomotive, dans lequel la radio CAB (2) est exploitée de sorte que les terminaux PMR sont incorporés en tant qu'abonnés équivalents au réseau radioélectrique numérique ou analogique.

11. Ensemble selon la revendication 10, dans lequel le circuit de commande est exploité pour l'annulation administrative ou déclenchée par l'utilisateur de l'attribution de terminaux PMR au train, au convoi ou à la locomotive, dans lequel la radio CAB (2) est exploitée de sorte que les terminaux PMR ne sont plus incorporés en tant qu'abonnés au réseau radioélectrique numérique ou analogique.

12. Ensemble selon l'une quelconque des revendications 9 à 11, dans lequel, à l'intérieur du train ou du convoi, il existe des appareils couplés à la radio CAB (2) avec ou sans fil pour la sortie d'informations, perceptible de façon acoustique ou visuelle, et au moyen de la liaison radioélectrique inter-réseaux, une retransmission d'informations d'un ou de plusieurs terminaux PMR est prévue par l'intermédiaire de la radio CAB (2) vers ces appareils.

13. Ensemble selon l'une quelconque des revendications 9 à 12, dans lequel les terminaux PMR sont des terminaux d'un réseau radioélectrique (10) local fonctionnant en tant que "Terrestrial Trunked Radio" TETRA.
